# EUROPEAN PATENT APPLICATION

(11) **EP 3 168 637 A1**
(43) Date of publication of application: **17.05.2017**
(21) Application number: 15194198.6
(22) Date of filing: 12.11.2015
(51) Int. Cl.: G01S 7/00, G01S 7/02, G01S 13/34, G01S 13/86, G01S 13/93

(54) **A MODULAR VEHICLE RADAR**

(71) Applicant: Autoliv Development AB, 447 83 Vårgårda (SE)
(72) Inventor: Jenkins, Alan, 85391 Allershausen (DE); Maisel, Juergen, 85567 Grafing bei Muenchen (DE)
(74) Representative: Sandstedt, Jonas Sven James

(57) **Abstract**

The present disclosure relates to a vehicle detector system (3) comprising at least one group of at least two analogue sensor arrangements (7a, 7b, 7c) arranged to generate a respective digital signal (20a, 20b, 20c). At least one analogue sensor arrangement is constituted by a radar transceiver arrangement (7a, 7b) and at least one analogue sensor arrangement (7c) is constituted by another form of analogue sensor arrangement (7c). Each analogue sensor arrangement (7a, 7b, 7c) comprises an ADC (Analogue to Digital Converter) arrangement (10a, 10b, 10c). Each group of analogue sensor arrangements (7a, 7b, 7c) is connected to a separate common control unit (13) via a corresponding communication bus link (22a, 22b, 22c) arranged to communicate an output from said ADC:s (10a, 10b, 10c). The common control unit (13) comprises a DSP (Digital Signal Processor) arrangement (12) and a control unit (32).

## Description

The present disclosure relates to a vehicle detector system comprising at least one group of at least two analogue sensor arrangements that are arranged to generate a respective digital signal.

Many vehicle detector systems comprise analogue sensor arrangements such as for example radar transceivers. A radar transceiver may for example be arranged to generate so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. Alternatively the ramp may be such that the frequency varies from a first high frequency to a second low frequency. The magnitude of the change in frequency from start to finish may for example be of the order of 0.5% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors/Cores (DSP:s) by means of Fast Fourier Transform (FFT) processing.

Vehicle detector systems may also comprise other analogue sensor arrangements such as digital camera arrangements, LIDAR (Light Detection and Ranging) arrangements and ultrasonic arrangements. These sensor arrangements also comprise a digital signal processing section, such as a DSP that takes the analogue signals, converts them to digital via an ADC and then processes the data further to extract useful information from the analogue sensor signal.

For all analogue sensor arrangements, the extracted useful information is for example in the form of an object list or more rarely a detection list. Such object lists are transmitted via a normal vehicle interface and cable system into a safety control unit where the high level object data from the various sensor types can be combined and used to implement or trigger a variety of well-known safety functions.

Each analogue sensor arrangements needs to be designed with regard to thermal dissipation and RF (Radio Frequency) shielding in order to cope with the heat that is generated due to high processing demands and interference problems between different parts. It is desired, however, to have an analogue sensor arrangement with alleviated demands for thermal design and internal RF shielding.

The object of the present disclosure is thus to provide a vehicle detector system comprising analogue sensor arrangements having alleviated demands for thermal design and internal RF shielding.

This object is achieved by means of a vehicle detector system comprising at least one group of at least two analogue sensor arrangements arranged to generate a respective digital signal. At least one analogue sensor arrangement is constituted by a radar transceiver arrangement, and at least one analogue sensor arrangement is constituted by another form of analogue sensor arrangement. Each analogue sensor arrangement comprises an ADC (Analogue to Digital Converter) arrangement. Each group of analogue sensor arrangements is connected to a separate common control unit via a corresponding communication bus link arranged to communicate an output from said ADC:s, where the common control unit comprises a DSP (Digital Signal Processor) arrangement and a control unit.

According to an example, said another form of analogue sensor arrangement is constituted by at least one of a digital camera arrangement, a LIDAR (Light Detection and Ranging) arrangement and/or an ultrasonic arrangement.

According to another example, said communication bus link is in the form of a serial link in the form of a shielded twisted pair or a coaxial cable.

According to another example, each radar transceiver arrangement is arranged to generate a respective radar signal, and to receive reflected signals where the transmitted radar signals have been reflected by one or more objects.

According to another example, each radar signal is in the form of an FMCW (Frequency Modulated Continuous Wave) chirp signal, where each chirp signal comprises a corresponding plurality of frequency ramps. Each frequency ramp runs between a first frequency and a second frequency.

Other examples are disclosed in the dependent claims.

A number of advantages are obtained by means of the present disclosure. Mainly, radar transceivers are provided having alleviated demands for thermal design and internal RF shielding.

Furthermore, by means of the present disclosure it is possible to have only one common control unit for a plurality of transceiver units, where the latency time between data fusion of different transceiver units are significantly reduced. Control unit improvements, for example regarding SOC (System-On-Chip), can easily be adopted by redesign only a common control unit instead of complete transceiver units.

Manufacturing tolerances and calibration data of each transceiver arrangement are stored in a non-volatile memory within each transceiver arrangement and can be read out by the common control unit during e.g. start-up phase of the system.

Internal RF shielding requirements are reduced and power dissipation is reduced such that no special thermal design is required. This also allows reduction of the mechanical dimensions of the transceiver arrangements which is limited by the ability to radiate heat.

### BRIEF DESCRIPTION OF THE DRAWINGS

The present disclosure will now be described more in detail with reference to the appended drawings, where:
- Figure 1: shows a schematic top view of a vehicle;
- Figure 2: shows a simplified schematic of a vehicle detector system; and
- Figure 3: shows an example of an FMCW chirp signal.

### DETAILED DESCRIPTION

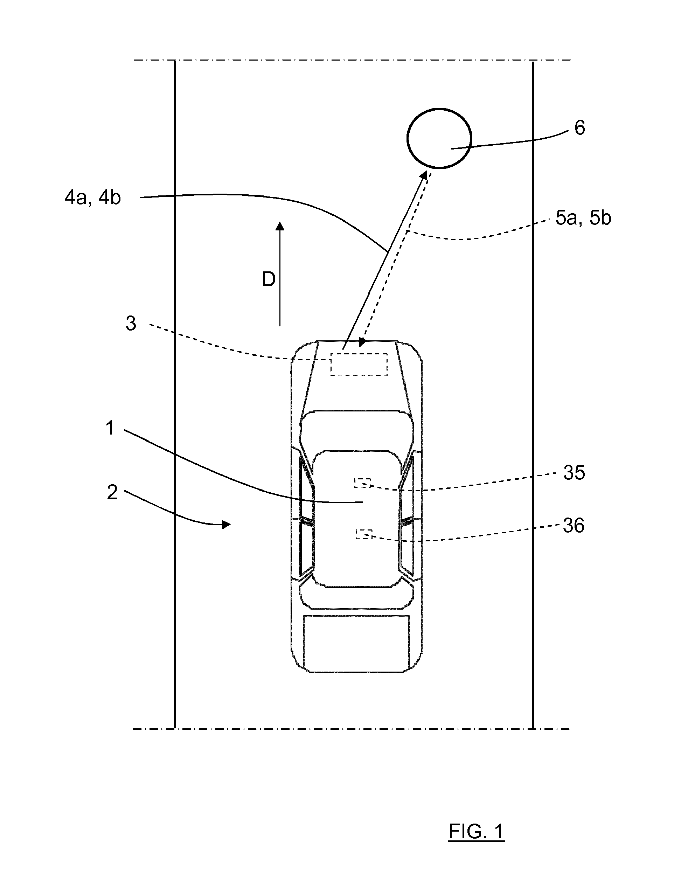

Figure 1 schematically shows a top view of a vehicle 1 arranged to run on a road 2 in a direction D, where the vehicle 1 comprises a vehicle detector system 3 which comprises a group of three analogue sensor arrangements 7a, 7b, 7c arranged to generate a respective digital signal. A first analogue sensor arrangement 7a is constituted by a first radar transceiver arrangement 7a, a second analogue sensor arrangement 7b is constituted by a second radar transceiver arrangement 7b, and a third analogue sensor arrangement 7c is constituted by a digital camera arrangement 7c.

The radar transceiver arrangements 7a, 7b are arranged to distinguish and/or resolve single targets from the surroundings by transmitting signals 4a, 4b and receiving reflected signals 5a, 5b and using a Doppler effect in a previously well-known manner. The radar transceiver arrangements 7a, 7b are arranged to provide azimuth angles of possible objects 6 by simultaneously sampling and analyzing phase and amplitude of the received signals 5a, 5b.

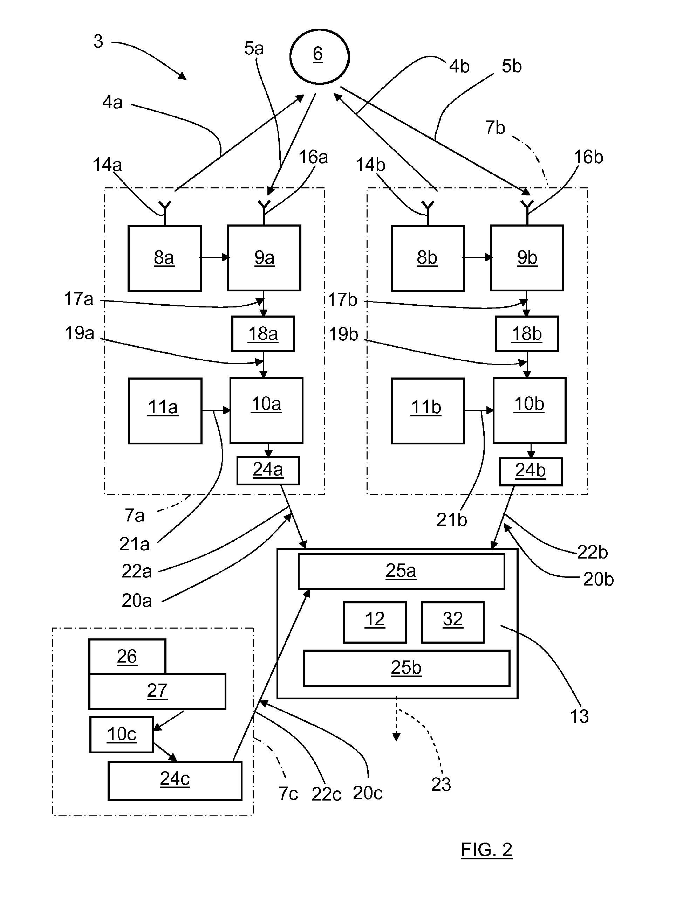

With reference also to Figure 2, each transceiver arrangement 7a, 7b is arranged for generating and transmitting sweep signals in the form of FMCW (Frequency Modulated Continuous Wave) chirp signals 4a, 4b of a previously known kind, and to receive reflected signals 5a, 5b, where the transmitted chirp signals 4a, 4b have been reflected by an object 6.

The first transceiver arrangement 7a comprises a first transmitter 8a with a first transmit antenna arrangement 14a, a first receiver 9a with a first receiver antenna arrangement 16a, a first Analog to Digital Converter (ADC) arrangement 10a and a first sampling and timing arrangement 11a. Correspondingly, the second transceiver arrangement 7b comprises a second transmitter 8b with a second transmit antenna arrangement 14b, a second receiver 9b with a second receiver antenna arrangement 16b, a second Analog to Digital Converter (ADC) arrangement 10b and a second sampling and timing arrangement 11b.

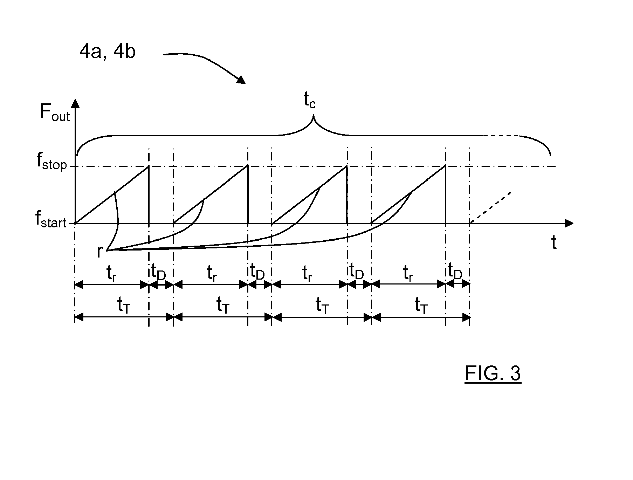

As shown in Figure 3, a transmitted FMCW chirp signal 4a, 4b is in the form of a continuous sinusoid where the output frequency Fₒᵤₜ varies from a first frequency fₛₜₐᵣₜ to a second frequency fₛₜₒₚ over the course of a ramp r, where each chirp signal 4a, 4b comprises repeating cycles of a plurality of frequency ramps r. There the magnitude of the first frequency fₛₜₐᵣₜ falls below the magnitude of the second frequency fₛₜₒₚ.

A cycle for a chirp signal 4a, 4b lasts for a certain cycle time t_{c}, each ramp r lasts a certain ramp time tᵣ, having a ramp period time t_{T}. Between two consecutive ramps of the chirp signal 4a, 4b there is a delay time t_{D}.

Referring back to Figure 2, the reflected signals 5a, 5b are received by the receivers 9a, 9b via the receiver antenna arrangement 16a, 16b. The received signals 5a, 5b, thus constituted by reflected radar echoes, are then mixed with the transmitted chirp signals 4a, 4b in the receivers 9a, 9b.

In this way, IF (Intermediate Frequency) signals 17a, 17b are acquired and filtered in corresponding IF filters 18a, 18b such that filtered IF signals 19a, 19b are acquired.

The difference frequency of the filtered IF signals 19a, 19b relates to the target distance and are transferred to the corresponding ADC arrangement 10a, 10b, where the filtered IF signals 19a, 19b are sampled at a certain predetermined sampling frequency fₛ and converted to digital signals 20a, 20b by means of the ADC arrangements 10a, 10b, the sampling frequency fₛ being provided in the form of a sampling and timing signal 21a, 21b produced by the corresponding sampling and timing arrangement 11a, 11b.

The digital camera arrangement 7c comprises a lens 26, a CMOS (Complementary Metal Oxide Semiconductor) sensor array arrangement 27 and a picture data ADC arrangement 10c. The CMOS sensor array arrangement comprises control circuitry 27 for controlling the functions of the digital camera arrangement 7c. The picture data ADC arrangement 10c is adapted to convert analogue image data to digital signals 20c.

According to the present disclosure, the first transceiver arrangement 7a, the second transceiver arrangement 7b and the digital camera arrangement 7c are connected to a separate common control unit 13 via a corresponding communication link bus 22a, 22b, 22c, where the common control unit 13 comprises a DSP (Digital Signal Processor) arrangement 12 and a control unit 32.

Each communication link bus 22a, 22b, 22c may be in the form of a serial link constituted by a shielded twisted pair or a coaxial cable. The common control unit 13 is shown to comprise a first bus interface 25a for communication via the communication link buses 22a, 22b, 22c .

Other types of communication link buses 22a, 22b, 22c are of course conceivable, even parallel link buses.

The communication link buses 22a, 22b, 22c are arranged for communicating raw un-processed digital data from the respective ADC arrangements 10a, 10b, 10c.

In each analogue sensor arrangements 7a, 7b, 7c there is a corresponding bus interface 24a, 24b, 24c. All or some parts of each transceiver arrangement 7a, 7b may be realized as one or more MMIC:s (Monolithic Microwave Integrated Circuits).

Suitably, according to some aspects, such an MMIC is able to initialize and execute radar signaling sequences by themselves. It is beneficial to implement diagnostics functions, which can be read out from the central processing unit on demand. Local storage of diagnostic trouble codes support this concept. Alternatively, a fast back-channel is needed for the selected bus to provide a fast back-channel enabling the common control unit 13 to control analogue sensor arrangements 7a, 7b, 7c. Such a fast back-channel is suitably arranged for data speeds exceeding 1 Mbit/s.

Many other types of links are of course conceivable, such as for example CAN (controller area network), CAN-FD (CAN with Flexible Data-Rate), FlexRay or Ethernet based bus systems such as BroadR-Reach.

According to some aspects, the common control unit 13 is in the form of a so called System-On-Chip (SOC) which handles radar signal processing and vehicle data processing. Alternatively, the common control unit 13 is in the form of an FPGA (Field-Programmable Gate Array), or a micro-controller DSP. The common control unit 13 is connected to other components in the vehicle 1 via a vehicle bus 23 such as a CAN bus. The common control unit 13 is shown to comprise a second bus interface 25b for communication via the vehicle bus 23.

The bus interfaces 25a, 25b of the common control unit 13 may be integrated into one combined bus interface.

The DSP arrangement 12 is adapted for radar signal processing by means of a first FFT (Fast Fourier Transform) to convert the digital signals 20 to a range domain, and a second FFT to combine the results from successive chirp signal ramps into the Doppler domain. This results in Range-Doppler matrices that are transferred for further processing, which is not further discussed here, many examples of such further processing being well-known in the art. The DSP arrangement 12 is also adapted for picture data signal processing in a well-known manner. The DSP arrangement 12 is for the above purposes suitable divided in two or more separate DSP units.

As indicated in Figure 1, the vehicle 1 comprises a safety control unit 35 and safety means 36, for example an emergency braking system and/or an alarm signal device. The safety control unit 35 is arranged to control the safety means 36 in dependence of input from the vehicle detector system 3, suitably via the vehicle bus 23.

Since the signal processing chain is present in the unit for all sensor arrangements 7a, 7b, 7c, information exchange at all levels can take place between the various signal processing components for various sensors and sensor types in an efficient manner using the full information available at a raw ADC level without any loss of information. This improves the overall performance of the vehicle detector system 3 from an efficiency perspective and improves the ability of a sensor network to perceive the surrounding environment, i.e. the feature or features now have a richer information set on which to base a decision.

Another benefit is that the hardware around the signal processing components, which normally is replicated in each individual sensor, is only needed at one position; at the common control unit 13.

The present disclosure is not limited to the examples above, but may vary freely within the scope of the appended claims. For example, the chirp signal ramps shown is only an example; they may for example be configured as up-ramp as described, or as down-ramps, or some combination of both. There may not be any delay time t_{D} between consecutive ramps.

The vehicle detector system may be implemented in any type of vehicle such as cars, trucks and buses as well as boats and aircraft.

The schematics of the vehicle detector system are simplified, only showing parts that are considered relevant for an adequate description of the present disclosure.

The number of antenna arrangements, antennas within each antenna arrangement and IF signals may vary.

Each ADC arrangement and DSP arrangement should be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Each antenna arrangement 14a, 14b; 16a, 16b may for example comprise one or more antennas, and each antenna may be constituted by one antenna element or by an array of antenna elements.

There may be any suitable number of analogue sensor arrangements where all are connected to a common control unit 13. Alternatively, there may be several groups of analogue sensor arrangements that are connected to different respective common control units.

For each group of analogue sensor arrangements, at least one analogue sensor arrangement is constituted by a radar transceiver arrangement 7a, 7b and at least one analogue sensor arrangement is constituted by another form of analogue sensor arrangement 7c. Said another form of analogue sensor arrangement is for example constituted by the described digital camera arrangements, but may also be constituted by a LIDAR (Light Detection and Ranging) arrangement and/or an ultrasonic arrangement. A group of analogue sensor arrangements may be constituted by any number of analogue sensor arrangements, but in view of the above, there should be at least two analogue sensor arrangements.

There may thus be one or more radar transceiver arrangements 7a, 7b, and one or more analogue sensor arrangements 7c of another type in the vehicle detector system 3. Two or more analogue sensor arrangements may be positioned within a common housing and/or module.

The common control unit 13 may for example may be in the form of a radar control unit (RCU), an ADAS (Advanced Driver Assistance Systems) ECU (Electronic Control Unit) or a combination of these.

Such a common control unit 13 may have different contents, but is generally arranged for digital signal processing of radar raw data received from the transceiver arrangements as well as from other sensor types such as the mentioned LIDAR, digital camera (Mono or Stereo) arrangements, and/or ultrasonic arrangements. The received data of the sensor elements will be de-serialized by single or multiple input de-serializers.

The transceiver arrangements 7a, 7b have been described to generate and transmit a respective FMCW chirp signal 4a, 4b. Other kinds of FMCW signals and FMCW signal configurations are also conceivable, as well as other types of Doppler radar signals. Pulse radar, FSK (frequency-shift keying) or CW (continuous wave) waveform are also conceivable, like all other kinds of suitable modulation techniques. Generally, the transceiver arrangements 7a, 7b are arranged to generate and transmit a least two radar signals 4a, 4b.

The transceiver arrangements 7a, 7b may also be referred to as so-called radar front ends (RFE:s).

Generally, the present disclosure relates to a vehicle detector system 3 comprising at least one group of at least two analogue sensor arrangements 7a, 7b, 7c arranged to generate a respective digital signal 20a, 20b, 20c, where at least one analogue sensor arrangement is constituted by a radar transceiver arrangement 7a, 7b and at least one analogue sensor arrangement 7c is constituted by another form of analogue sensor arrangement 7c, where each analogue sensor arrangement 7a, 7b, 7c comprises an ADC (Analogue to Digital Converter) arrangement 10a, 10b, 10c. Each group of analogue sensor arrangements 7a, 7b, 7c is connected to a separate common control unit 13 via a corresponding communication bus link 22a, 22b, 22c arranged to communicate an output from said ADC:s 10a, 10b, 10c, where the common control unit 13 comprises a DSP (Digital Signal Processor) arrangement 12 and a control unit 32.

According to an example, said another form of analogue sensor arrangement 7c is constituted by at least one of a digital camera arrangement, a LIDAR (Light Detection and Ranging) arrangement and/or an ultrasonic arrangement.

According to an example, said communication bus link 22a, 22b, 22c is in the form of a serial link 22a, 22b, 22c in the form of a shielded twisted pair or a coaxial cable.

According to an example, the common control unit 13 is in the form of an FPGA (Field-Programmable Gate Array), a SOC (System-On-Chip) or micro-controller DSP combination, and is arranged to handle radar signal processing and vehicle data processing.

According to an example, the common control unit 13 is in the form of an RCU (Radar Control Unit) or ADAS (Advanced Driver Assistance Systems) ECU (Electronic Control Unit), or a combination of these.

According to an example, the common control unit 13 is connected to other components in the vehicle 1 via a vehicle bus 23.

According to an example, each radar transceiver arrangement 7a, 7b is arranged to generate a respective radar signal 4a, 4b, and to receive reflected signals 5a, 5b where the transmitted radar signals 4a, 4b have been reflected by one or more objects 6.

According to an example, each radar signal is in the form of an FMCW (Frequency Modulated Continuous Wave) chirp signal 4a, 4b where each chirp signal 4a, 4b comprises a corresponding plurality of frequency ramps r, and where each frequency ramp r runs between a first frequency fₛₜₐᵣₜ and a second frequency fₛₜₒₚ.

According to an example, the detector system 3 is arranged to provide input to a safety control unit 35 that in turn is arranged to control safety means 36, where the detector system 3, the safety control unit 35 and the safety means 36 are comprised in a vehicle 1.

## Claims

1. A vehicle detector system (3) comprising at least one group of at least two analogue sensor arrangements (7a, 7b, 7c) arranged to generate a respective digital signal (20a, 20b, 20c), where at least one analogue sensor arrangement is constituted by a radar transceiver arrangement (7a, 7b) and at least one analogue sensor arrangement (7c) is constituted by another form of analogue sensor arrangement (7c), where each analogue sensor arrangement (7a, 7b, 7c) comprises an ADC, Analogue to Digital Converter, arrangement (10a, 10b, 10c), **characterized in that** each group of analogue sensor arrangements (7a, 7b, 7c) is connected to a separate common control unit (13) via a corresponding communication bus link (22a, 22b, 22c) arranged to communicate an output from said ADC:s (10a, 10b, 10c), where the common control unit (13) comprises a DSP, Digital Signal Processor, arrangement (12) and a control unit (32).

2. The vehicle detector system (3) according to claim 1, **characterized in that** said another form of analogue sensor arrangement (7c) is constituted by at least one of a digital camera arrangement, a LIDAR, Light Detection and Ranging, arrangement and/or an ultrasonic arrangement.

3. The vehicle detector system (3) according to any one of the claims 1 or 2, **characterized in that** said communication bus link (22a, 22b, 22c) is in the form of a serial link (22a, 22b, 22c) in the form of a shielded twisted pair or a coaxial cable.

4. The vehicle detector system (3) according to any one of the previous claims, **characterized in that** the common control unit (13) is in the form of an FPGA, Field-Programmable Gate Array, a SOC, System-On-Chip, or micro-controller DSP combination, and is arranged to handle radar signal processing and vehicle data processing.

5. The vehicle detector system (3) according to any one of the previous claims, **characterized in that** the common control unit (13) is in the form of an RCU, Radar Control Unit, or ADAS, Advanced Driver Assistance Systems, ECU, Electronic Control Unit, or a combination of these.

6. The vehicle detector system (3) according to any one of the previous claims, **characterized in that** the common control unit (13) is connected to other components in the vehicle (1) via a vehicle bus (23).

7. The vehicle detector system (3) according to any one of the previous claims, **characterized in that** each radar transceiver arrangement (7a, 7b) is arranged to generate a respective radar signal (4a, 4b), and to receive reflected signals (5a, 5b) where the transmitted radar signals (4a, 4b) have been reflected by one or more objects (6).

8. The vehicle detector system (3) according to claim 7, **characterized in that** each radar signal is in the form of an FMCW, Frequency Modulated Continuous Wave, chirp signal (4a, 4b) where each chirp signal (4a, 4b) comprises a corresponding plurality of frequency ramps (r), and where each frequency ramp (r) runs between a first frequency (fₛₜₐᵣₜ) and a second frequency (fₛₜₒₚ) .

9. The vehicle detector system (3) according to any one of the previous claims, **characterized in that** the detector system (3) is arranged to provide input to a safety control unit (35) that in turn is arranged to control safety means (36), where the detector system (3), the safety control unit (35) and the safety means (36) are comprised in a vehicle (1).
